(19) Europäisches Patentamt
European Patent Office
Office européen des brevets

(11) **EP 4 294 122 A1**

(12) **EUROPEAN PATENT APPLICATION**

(43) Date of publication:
**20.12.2023 Bulletin 2023/51**

(21) Application number: **22179004.1**

(22) Date of filing: **14.06.2022**

(51) International Patent Classification (IPC):
**H05B 3/34** *(2006.01)*      **H05B 3/14** *(2006.01)*

(52) Cooperative Patent Classification (CPC):
**H05B 3/34; H05B 3/145;** H05B 2203/011;
H05B 2203/017; H05B 2203/02; H05B 2203/029;
H05B 2203/036

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1020 Vienna (AT)**

(72) Inventors:
• **HAGSTRAND, Per-Ola
444 86 Stenungsund (SE)**
• **THORN, Niklas
444 86 Stenungsund (SE)**

• **EDEBLAD, Sven
444 86 Stenungsund (SE)**
• **SCHUETZ, Florian
4021 Linz (AT)**
• **SURESH BABU, Suhas Donthy
1020 Vienna (AT)**
• **TORRES, Juan Pablo
4021 Linz (AT)**
• **GOSWAMI, Mithun
4021 Linz (AT)**

(74) Representative: **Borealis AG
Borealis Polyolefine GmbH
IPR-Department
St.-Peter-Straße 25
4021 Linz (AT)**

(54) **SUSTAINABLE SELF-REGULATING HEATING LAMINATE**

(57)      A flat sheet electrical heater, preferably obtainable by coextrusion or colamination, comprising:
a plurality of elongate conductors, preferably evenly spaced apart from and preferably substantially parallel to each other,
said conductors being at least partially embedded within and in contact with an electrically semiconductive composition with a positive temperature coefficient (PTC) comprising a polyethylene, polypropylene or a mixture thereof and a conductive filler,
wherein said electrically semiconductive composition preferably is comprised in an extruded film having a machine direction
and said elongate conductors are preferably parallel with the machine direction of the extruded film comprising the semiconductive composition;
wherein the semiconductive composition has an electrical conductivity $\alpha$ from 2 to 50 S/m, measured at 40°C in accordance with the "Conductivity method" as described under "Determination methods",
wherein 20°C $\leq$ TEq $\leq$ 50 °C and TEq is defined as the temperature where d$\sigma$/dT is at its minimum.

EP 4 294 122 A1

**Description**

This invention relates to a self-regulating heating laminate, in particular to a sustainable flat sheet self-regulating heater suitable for use in close contact with humans or animals, and to processes for the preparation of such a structure. In particular, the invention relates to the use of colamination to prepare the flat sheet self-regulating heater or, preferably the use of coextrusion to prepare the flat sheet self-regulating heater and hence the ability to prepare these flat sheet self-regulating heaters continuously and hence cheaply.

**Background of Invention**

Parallel resistance self-regulating heating cables are known. Such cables normally comprise two conductors extending longitudinally along the cable. Typically, the conductors are embedded within a resistive polymeric heating element, the element being extruded continuously along the length of the conductors. The cable thus has a parallel resistance form, with power being applied via the two conductors to the heating element connected in parallel across the two conductors. The heating element usually has a positive temperature coefficient of resistance. Thus as the temperature of the heating element increases, the resistance of the material electrically connected between the conductors increases, thereby reducing power output. Such heating cables, in which the power output varies according to temperature, are said to be self-regulating or self-limiting.

Thus, to avoid overheating and potential destruction of the object, they are self-limiting and require no regulating electronics.

Self-regulation utilises a conversion from electrical to thermal energy by allowing a current to pass through a semiconductive medium with Positive temperature coefficient (PTC) characteristics, which elevates the object temperature above that of its surroundings, until a steady state is reached (self-regulation). A material with a PTC has an electrical resistance that increases with temperature in such a way that, at a certain temperature, the heating power reaches equilibrium with the heat losses from the object, resulting in stable temperature and explaining the mechanism behind the self-regulating function. These PTC cables are often used in underfloor heating or wrapped around pipes for e.g. anti-freeze purpose. Cables however, do not offer a significant surface area of heat so it takes a large number of cables to provide underfloor heating for example.

The present inventors therefore sought to provide flat sheet heaters as opposed to cables. Such flat sheets may be rectangular or square in cross section rather than cables.

There are however disclosures of flat sheet heaters in the literature. In WO2014/188190, an electrical heater is described that comprises conductors and a heating element disposed between the conductors wherein the heating element comprises an electrically conductive material distributed within a first electrically insulating material. The insulating material separates the conductor from the electrically conductive material. This complex set up is not however required.

US6512203 describes an apparatus for electrically heating a glass substrate, in which conductors adhere to said surface and a resistive film adheres to said surface.

US7250586 describes a surface heating system for a car seat or the like comprising a support and a heating layer that contains an electrically conductive plastic, which is characterized by the fact that the heating layer is formed by a flexible film and that the support is flexible.

US4247756 describes a heated floor mat in which two inner electrically conductive inner layers sandwich conductors. These conductors are adhered to the inner layers.

US7053344 describes a flexible heater for a fabric. The construction is not one that can be prepared by coextrusion.

EP0731623 describes a PTC cable in which a PVC and conductive filler are present. The cable is surrounded by a microcrystalline siliceous product to improve performance.

US5451747 describes a heat mat with PTC material surrounded by an insulation material. The mat contains two conductors surrounded by a medium density, highly flexible PTC material.

WO2008/133562 describes a heating device with two electrodes within a PTC heat generating material where the PTC material contains electrode interconnection sections of a low resistivity PTC material relative to the rest of the heat generating material. The distance between the electrodes in '562 is 380 mm. Such a large gap leads to problems with heating of the device as the heating process is slow. Moreover, in order to ensure sufficient heat in the device, a high voltage is required, such as that from a mains source. The device in '562 is suitable therefore for a limited number of applications, e.g. under floor heating, but due to the high voltage required, there are inherent safety risks with such a product as accidently drilling into the product could lead to a serious electric shock.

Furthermore, most of the flat sheet heaters disclosed in the prior art comprise multiple layers and/or comprise a combination of many different materials.

In view of sustainable development, there is a key need to design materials with sustainability performance in mind and to focus on possibilities to facilitate the handling of products when they have reached end-of-life (EOL) to contribute to a circular economy. Sustainable development, defined as "development that meets the needs of the present without compromising the ability of future generations to meet their own needs", is an important topic globally.

The present inventors have appreciated that sustainable, simple, flexible and cheap heaters which are suitable for use in close contact with humans or animals can be prepared where the conductors and the polymer composition in which they are at least partially embedded are colaminated or coextruded to form the target material.

The present invention enables the use of a 'simpler' flat sheet self-regulating heater design, thus reducing material consumption and increasing sustainability performance of the heater design. At the same time, the elimination of different layers and/or elimination of different materials also facilitates the handling of the heaters when they have reached end-of-life and hence further increases the sustainability performance.

In the latter embodiment, this means that a continuous sheet can be prepared with a plurality of preferably parallel and preferably equally spaced conductors.. In particular, the conductors are preferably maintained close together, e.g. 20 to 150 mm apart. The resulting device heats very rapidly and lower voltages can be used in the product thus avoiding the risk of electric shock and hence further increasing the suitability for use in close contact with humans or animals. The device can then be used in a wider variety of applications such as in heated clothing or car seats as battery power or low risk voltages are sufficient to heat the material. In addition, due to the inherent self-regulating characteristics, the need for control electronics is eliminated / reduced.

**Summary of Invention**

Viewed from one aspect the invention provides a flat sheet electrical heater, preferably obtainable by coextrusion or colamination, comprising:

a plurality of elongate conductors,
said conductors being at least partially embedded within and in contact with an electrically semiconductive composition with a positive temperature coefficient (PTC) comprising at least one polyolefin component such as polyethylene, polypropylene or a mixture thereof and a conductive filler,
wherein said electrically semiconductive composition preferably is comprised in an extruded film having a machine direction and said conductors are preferably parallel with the machine direction of the extruded film comprising the semiconductive composition;
wherein the semiconductive composition has an electrical conductivity $\sigma$ from 2 to 50 S/m, measured at 40°C in accordance with the "Conductivity method" as described under "Determination methods",
wherein 20°C $\leq T_{Eq} \leq$ 50 °C and $T_{Eq}$ is defined as the temperature where d$\sigma$/dT is at its minimum.

Viewed from another aspect the invention provides a multilayer flat sheet electrical heater obtainable by colamination or coextrusion, preferably colamination, comprising, in this order,

a first layer comprising an electrically semiconductive composition with a positive temperature coefficient comprising at least one polyolefin component such as polyethylene, polypropylene or a mixture thereof and a conductive filler;
a conductor layer comprising a plurality of elongate conductors
a second layer comprising an electrically semiconductive composition with a positive temperature coefficient comprising at least one polyolefin component such as polyethylene, polypropylene or a mixture thereof and a conductive filler such that said conductor layer is sandwiched between and in contact with said first and second layers;
wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity $\sigma$ from 2 to 50 S/m, measured at 40°C in accordance with the "Conductivity method" as described under "Determination methods",
wherein 20°C $\leq T_{Eq} \leq$ 50 °C and $T_{Eq}$ is defined as the temperature where d$\sigma$/dT is at its minimum.

Viewed from another aspect the invention provides a multilayer flat sheet electrical heater, obtainable by colamination or coextrusion, preferably colamination, comprising, in this order,

a first layer comprising an electrically semiconductive composition with a positive temperature coefficient comprising at least one polyolefin component such as polyethylene, polypropylene or a mixture thereof and a conductive filler;
a conductor layer comprising a plurality of elongate conductors;
a second layer comprising an electrically semiconductive composition with a positive temperature coefficient comprising at least one polyolefin component such as polyethylene, polypropylene or a mixture thereof and a conductive filler such that said conductor layer is sandwiched between and in contact with said first and second layers;
wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity $\sigma$ from 2 to 50 S/m, measured at 40°C in accordance with the "Conductivity method" as described under "Determination methods",
wherein 20°C $\leq T_{Eq} \leq$ 50 °C and $T_{Eq}$ is defined as the temperature where d $\sigma$/dT is at its minimum; and
wherein there is no adhesive between any layers of said heater.

Viewed from another aspect the invention provides a process for the preparation of a multilayer flat sheet electrical heater comprising the steps of (a)

- providing and melt mixing in an extruder, a first electrically semiconductive composition comprising at least one polyolefin component such as polyethylene, polypropylene or a mixture thereof and a conductive filler,

- providing and melt mixing in an extruder, a second electrically semiconductive composition which comprises at least one polyolefin component such as polyethylene, polypropylene or a mixture thereof and a conductive filler,
(b) applying on a plurality of preferably evenly spaced apart elongate conductors by coextrusion,

- a meltmix of the first electrically semiconductive composition obtained from step (a),

- a meltmix of the second electrically semiconductive composition obtained from step (a),

to form a multilayer flat sheet heater having three layers, a core layer comprising a plurality of preferably parallel evenly spaced apart elongate conductors at least partially embedded within and in contact with first and second electrically semiconductive composition layers wherein the average distance between elongate conductors is preferably between 20 to 2000 mm;
wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity $\sigma$ from 2 to 50 S/m, measured at 40°C in accordance with the "Conductivity method" as described under "Determination methods",
wherein 20°C $\leq T_{Eq} \leq$ 50 °C and $T_{Eq}$ is defined as the temperature where d$\sigma$/dT is at its minimum.

Viewed from another aspect the invention provides a process for the preparation of a multilayer flat sheet electrical heater comprising the steps of (a)

- providing and melt mixing in an extruder, a first electrically semiconductive composition comprising at least one polyolefin component such as polyethylene, polypropylene or a mixture thereof and a conductive filler and extruding said first electrically semiconductive composition to form a first layer,
- providing and melt mixing in an extruder, a second electrically semiconductive composition which comprises at least one polyolefin component such as polyethylene, polypropylene or a mixture thereof and a conductive filler and extruding said second electrically semiconductive composition to form a second layer,

(b) colaminating said first and second layers with a plurality of preferably evenly spaced apart elongate conductors wherein the average distance between elongate conductors is preferably between 20 to 2000 mm to form a multilayer flat sheet heater having three layers, a core layer comprising a plurality of preferably evenly spaced apart elongate conductors sandwiched between and in contact with first and second electrically semiconductive composition layers;
wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity $\sigma$ from 2 to 50 S/m, measured at 40°C in accordance with the "Conductivity method" as described under "Determination methods",
wherein 20°C $\leq T_{Eq} \leq$ 50 °C and $T_{Eq}$ is defined as the temperature where d $\sigma$/dT is at its minimum.

**Detailed Description of Invention**

The present invention relates to a sustainable flat sheet electrical heater than can be used in a wide variety of objects, in particular in close contact with humans or animals, to provide heat in a sustainable, safe, cheap and simple manner. The flat sheet electrical heater of the invention uses the principle of positive temperature coefficient (PTC). To avoid overheating and potential destruction of the object, the heater is self-regulating or self-limiting and requires no regulating electronics. In one embodiment therefore, the flat sheet heater of the invention contains no regulating electronics, e.g. a heat cut off to prevent overheating.

**Electrically semiconductive composition components**

The electrically semiconductive composition cannot overheat and requires no overheat protection. The technical solution in this particular invention utilises conversion from electrical to thermal energy by allowing a current to pass through a semiconductive medium with PTC characteristics, which elevates the object temperature above that of its surroundings, until a steady state is reached (self-regulation).

It is preferred if the conductors are substantially parallel with the machine direction of the semiconductive composition. The machine direction is the direction the extruded film moves through the extruder or laminating machine. Films will tend to shrink more in the machine direction than in the transverse direction when subjected to heat so that even in a final article, the orientation can be determined.

The electrically semiconductive composition comprises a polyolefin and a conductive filler (e.g. carbon black). The self-regulating or self-limiting thermal phenomenon occurs due to two parallel antagonistic processes:

a. Poor conduction of electrons through the semiconductive medium generates electrical losses, manifested in heat emission.

b. Thermal expansion of the non-conductive part of the material leads to further decrease of the conductivity by separation of the conductive filler particles.

Once the two processes have equalised, a steady elevated temperature plateau or the self-regulating temperature is reached.

The inventors have found that when a semiconductive composition is selected with an electrical conductivity $\sigma$ from 2 to 50 S/m, measured at 40°C in accordance with the "Conductivity method" as described under "Determination methods", and fulfilling the following equation: $20°C \leq T_{Eq} \leq 50 °C$ and $T_{Eq}$ is defined as the temperature where $d\sigma/dT$ is at its minimum, then the flat sheet heaters are particularly suitable for use in close contact to humans or animals.

Preferably, the electrical conductivity $\sigma$ of the semiconductive composition as used in the flat sheet heater of the present invention, is equal to or higher than 4 S/m, preferably equal to or higher than 5 S/m or equal to or higher than 6 S/m, and preferably, the electrical conductivity $\sigma$ is equal to or lower than 40 S/m, more preferably equal to or lower than 30 S/m, even more preferably equal to or lower than 25 S/m, yet even more preferably equal to or lower than 10 S/m and most preferably equal to or lower than 14 S/m, measured at 40°C in accordance with the "Conductivity method" as described under "Determination methods".

The higher the conductivity, the higher the heating power $P_H$. The inventors have found that good results are obtained when the electrical conductivity is between 4 and 40 S/m, measured at 40°C in accordance with the "Conductivity method" as described under "Determination methods".

Below the relation between heating power and electrical conductivity of a PTC material is derived:
The heating power, $P_H$ of an object is equal to the applied DC voltage "U" times the current, "I":

$$P_H = U \times I \qquad (Eq. 1)$$

The current "I" is equal to the voltage "U" divided by the electrical resistance, "R" of the object (Ohm's law):

$$I = U/R \qquad (Eq. 2)$$

Thus, the heating power, $P_H$ is equal to the voltage "U" squared and divided by the resistance "R":

$$P_H = U^2 / R \qquad (Eq. 3)$$

The resistance, "R" of the PTC object is proportional to its volume resistivity, "VR" and hence:

$$P_H \propto 1/VR \qquad \text{(Eq. 4)}$$

Now, the inverse of the volume resistivity "VR" is equal to the material's conductivity, "$\sigma$" and hence:

$$P_H \propto \sigma \qquad \text{(Eq. 5)}$$

The conductivity "$\sigma$" is a function of the temperature, T, which means that also the heating power, $P_H$ (for a given applied voltage) follows the same function.

$$P_H(T) \propto \sigma(T) \qquad \text{(Eq. 6)}$$

If the heating power, $P_H$ is higher than the heat losses, $P_L$ the temperature of the object will increase. The higher $P_H$ is versus $P_L$, the faster the temperature increase will be.

The slope of $\sigma(T)$ versus temperature T, i.e. the first derivative or $d\sigma/dT$, below the self-regulating temperature, reflects the heating speed.

It is understood that a flat sheet heater preferably reaches a steady elevated temperature plateau quickly and hence also has a high heating speed. Preferably, the first derivative or $d\sigma/dT$ between 23°C and 40°C of the semiconductive composition as used in the flat sheet heater of the present invention, is equal to or higher than -0.7 S/(m-°C), preferably equal to or higher than -0.6 S/(m-°C) or equal to or higher than -0.5 S/(m-°C), and preferably, equal to or lower than -0.05 S/(m-°C), more preferably equal to or lower than -0.10 S/(m·°C), even more preferably equal to or lower than -0.15 S/(m·°C), wherein $\sigma$ is measured in accordance with the "Conductivity method" as described under "Determination methods".

As explained above, the electrical conductivity $\sigma$ is a function of the temperature T. Hence, the ratio of the electrical conductivity $\sigma$ measured at 23°C and the electrical conductivity $\sigma$ measured at 40°C ($\sigma(23°C)/\sigma(40°C)$) measured in accordance with the "Conductivity method" as described under "Determination methods" will also reflect the heating speed. Hence, preferably, the ratio $\sigma(23°C)/\sigma(40°C)$ of the semiconductive composition as used in the flat sheet heater of the present invention, is equal to or higher than 1.1, more preferably equal to or higher than 1.2, even more preferably equal to or higher than 1.3, yet even more preferably equal to or higher than 1.4 and preferably equal to or lower than 3, more preferably equal to or lower than 2.5, more preferably equal to or lower than 2, more preferably equal to or lower than 1.8.

The inventors believe that the temperature where the minimum of $d\sigma/dT$ occurs, equals the temperature where $P_H$ is approaching $P_L$ (i.e an equilibrium) most rapidly. The inventors further believe that the temperature where $d\sigma/dT$ is at its minimum, is the PTC material's most optimal or equilibrium self-regulating temperature, further on referred to as $T_{Eq}$. It is understood that minimum in this sense refers to the absolute minimum of $d\sigma/dT$. In order to be suitable for use in close contact to humans or animals, $T_{Eq}$ should comply with 20°C < $T_{Eq}$ < 50 °C wherein $T_{Eq}$ is defined as the temperature where $d\sigma/dT$ is at its minimum.

Preferably, the $T_{Eq}$ is equal to or higher than 25°C, more preferably equal to or higher than 28°C, even more preferably equal to or higher than 30°C, yet even more preferably equal to or higher than 32°C, yet even more preferably equal to or higher than 34°C, most preferably equal to or higher than 35°C and preferably, the $T_{Eq}$ is equal to or lower than 48°C, more preferably equal to or lower than 46°C, even more preferably equal to or lower than 44°C, yet even more preferably equal to or lower than 42°C and most preferably equal to or lower than 40°C. The inventors have found that good results are obtained when $T_{Eq}$ complies with 35°C $\leq$ $T_{Eq}$ $\leq$ 40°C.

It is further understood that a flat sheet heater preferably has a certain self-regulated turn-off capability (i.e. reflected as a significant drop in heating power above 40°C). This turn-off capability is equally reflected by the minimum value of $d\sigma/dT$, further on referred to as min. $d\sigma/dT$ (i.e. the maximum drop in heating power as a function of temperature). Preferably, the min. $d\sigma/dT$ of the semiconductive composition as used in the flat sheet heater of the present invention, is equal to or higher than -0.7 S/(m·°C), preferably equal to or higher than -0.6 S/(m·°C) or equal to or higher than -0.5 S/(m·°C), and preferably, equal to or lower than -0.1 S/(m·°C), more preferably equal to or lower than -0.2 S/(m·°C), even more preferably equal to or lower than -0.3 S/(m·°C), wherein $\sigma$ is measured in accordance with the "Conductivity method" as described under "Determination methods".

The ratio of the electrical conductivity $\sigma$ measured at 60°C and the electrical conductivity $\sigma$ measured at 40°C ($\sigma(60°C)/\sigma(40°C)$) measured in accordance with the "Conductivity method" as described under "Determination methods" will also reflect this turn off capability, i.e. a lower ratio reflects an improved turn off capability. Hence, preferably, the

ratio $\sigma(60°C)/\sigma(40°C)$ of the semiconductive composition as used in the flat sheet heater of the present invention, is preferably equal to or lower than 0.9, more preferably equal to or lower than 0.7, more preferably equal to or lower than 0.6. The lower limit is not particularly limited but preferably equal to or higher than 0.1, more preferably equal to or higher than 0.2, even more preferably equal to or higher than 0.3.

**Polyolefin component**

The electrically semiconductive composition comprises at least one polyolefin component such as polyethylene, polypropylene or a mixture thereof.

It is understood that the origin of these materials is not particularly limited, meaning that virgin polyolefin components can be used as well as recycled polyolefins or polyolefins produced from renewable resources.

Suitable polyethylenes include high density polyethylene (density of 940 kg/m$^3$ of more), medium density polyethylene (density of 930 to 940 kg/m$^3$), and low density or linear low density polyethylene (density of 910 to 930 kg/m$^3$).

Suitable polypropylenes include homo and copolymers of polypropylene. Suitable comonomers include ethylene.

The use of a polyethylene is preferred. If the heater comprises multiple semiconductive layers, it is preferred if a polyethylene is used in all such layers, preferably the same polyethylene.

It is further preferred if the polyethylene is one prepared in a high temperature autoclave or tubular process such as a LDPE homopolymer or copolymer.

Although the term LDPE is an abbreviation for low density polyethylene, the term is understood not to limit the density range, but covers the LDPE-like high pressure (HP) polyethylenes. The term LDPE describes and distinguishes only the nature of HP polyethylene with typical features, such as different branching architecture, compared to the polyethylene produced in the presence of an olefin polymerisation catalyst.

The LDPE as said polyolefin means a low density homopolymer of ethylene (referred herein as LDPE homopolymer) or a low density copolymer of ethylene with one or more comonomer(s) (referred herein as LDPE copolymer).

It is preferred if the electrically semiconductive composition comprises an LDPE copolymer. The one or more comonomers of LDPE copolymer are preferably selected from the polar comonomer(s), non-polar comonomer(s) or from a mixture of the polar comonomer(s) and non-polar comonomer(s). Moreover, said LDPE homopolymer or LDPE copolymer may optionally be unsaturated.

As a polar comonomer for the LDPE copolymer, comonomer(s) containing carboxyl and/or ester group(s) are used as said polar comonomer. Still more preferably, the polar comonomer(s) of LDPE copolymer is selected from the groups of acrylate(s), methacrylate(s) or acetate(s), or any mixtures thereof.

If present in said LDPE copolymer, the polar comonomer(s) is preferably selected from the group of alkyl acrylates, alkyl methacrylates or vinyl acetate, or a mixture thereof.

Further preferably, said polar comonomers are selected from $C_1$- to $C_6$-alkyl acrylates, $C_1$- to $C_6$-alkyl methacrylates or vinyl acetate. Still more preferably, said LDPE copolymer is a copolymer of ethylene with $C_1$- to $C_4$-alkyl acrylate, such as methyl, ethyl, propyl or butyl acrylate, or vinyl acetate, or any mixture thereof. The use of ethylene methyl acrylate (EMA), ethylene ethyl acrylate (EEA), ethylene butyl acrylate (EBA) or ethylene vinyl acetate (EVA) is preferred.

As the non-polar comonomer(s) for the LDPE copolymer preferred options are polyunsaturated comonomers comprising C and H atoms only. In a preferred embodiment, the polyunsaturated comonomer consists of a straight carbon chain with at least 8 carbon atoms and at least 4 carbon atoms between the non-conjugated double bonds, of which at least one is terminal.

A preferred diene compound is 1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof can be mentioned.

If the LDPE polymer is a copolymer, it preferably comprises 0.001 to 40 wt.-%, more preferably 0.05 to 40 wt.-%, still more preferably 1 to 30 wt%%, of one or more comonomer(s). Where there is a polar comonomer, the comonomer content is preferably 5 to 30 wt%, such as 7.5 to 20 wt%.

The polyolefin may optionally be unsaturated, e.g. the LDPE polymer may comprise carbon-carbon double bonds. The term "unsaturated" means herein that the polyolefin contains carbon-carbon double bonds/1000 carbon atoms in a total amount of at least 0.2/1000 carbon atoms, such as at least 0.4/1000 carbon atoms.

The polyolefin can be unimodal or multimodal, e.g. bimodal.

Preferably, the polyolefin has a melt flow rate MFR2.16/190°C of 0.1 to 50 g/10 min, more preferably 0.3 to 20 g/10 min, even more preferably 1.0 to 15 g/10 min, and most preferably 2.0 to 10 g/10 min.

Any LDPE homopolymer or copolymer may have a density of 905 to 935 kg/m$^3$, such as 910 to 925 kg/m$^3$.

The polyolefin can be produced by any conventional polymerisation process. Preferably, it is an LDPE and is produced by radical polymerisation, such as high pressure radical polymerisation. High pressure polymerisation can be effected in a tubular reactor or an autoclave reactor. Preferably, it is a tubular reactor. In general, the pressure can be within the range of 1200-3500 bars and the temperature can be within the range of 150°C-350°C. Further details about high pressure radical polymerisation are given in WO93/08222, which is herewith incorporated by reference. The polymers of the semiconductive composition are well known and are commercially available.

The electrically semiconductive composition may comprise at least 50 wt% of the polyethylene, polypropylene or a mixture thereof, such as at least 60 wt%. Any layer in which the electrically semiconductive composition is present may consist of the electrically semiconductive composition. Any layer in which the electrically semiconductive composition is present may comprise at least 50 wt% of the polyethylene, polypropylene or a mixture thereof, such as at least 60 wt%. The polyethylene and/or polypropylene will form the balance of the electrically semiconductive composition once all other components are determined.

**Conductive Filler**

According to the present invention, the electrically semiconductive composition further comprises a conductive filler such as carbon black.

Suitable conductive fillers include graphite, graphene, carbon fibres, carbon nanotubes, metal powders, metal strands or carbon black. The use of carbon black is preferred.

The semiconductive properties result from the conductive filler added. Thus, the amount of conductive filler is at least such that a semiconducting composition is obtained. Depending on the desired use and conductivity of the composition, the amount of conductive filler can vary. It is understood that different filler levels allow tailoring of the heat generated. However, preferably, the electrically semiconductive composition comprises 5-50 wt% conductive filler. In other preferred embodiments, the amount of conductive filler is 5-48 wt.-%, 10-45 wt%, 20-45 wt%, 25-45 wt% or 30-41 wt%, based on the weight of the electrically semiconductive composition.

Any carbon black can be used which is electrically conductive. Examples of suitable carbon blacks include furnace blacks, channel blacks, gas blacks, lamp blacks, thermal blacks and acetylene blacks. Additionally, graphitised furnace blacks (as produced by Imerys) and high structure blacks (known as Ketjenblacks produced by Nouryon) may also be used. Mixtures may also be used. Where a blend of carbon blacks is used then this percentage refers to the sum of the carbon blacks present.

The carbon black may have a nitrogen surface area (BET) of 5 to 1500 $m^2/g$, for example of 10 to 300 $m^2/g$, e.g. of 30 to 200 $m^2/g$, when determined according to ASTM D3037-93. Further, the carbon black may have one or more of the following properties:

a primary particle size of at least 5 nm which is defined as the number average particle diameter according to ASTM D3849-95a,

iodine adsorption number (IAN) of at least 10mg/g, for example 10 to 300 mg/g, e.g. 30 to 200 mg/g, when determined according to ASTM D-1510; and/or

DBP (dibutyl phthalate) absorption number (= oil absorption number) of at least 30 cm3/100g, for example 60 to 300 $cm^3/100g$, e.g. 70 to 250 $cm^3/100g$, for example 80 to 200 $cm^3/100g$, e.g. 90 to 180 $cm^3/100g$, when measured according to ASTM D 2414.

Furthermore, the carbon black may have one or more of the following properties:

a) a primary particle size of at least 15 nm which is defined as the number average particle diameter according ASTM D3849-95a;
b) iodine number of at least 30 mg/g according to ASTM D1510;
c) oil absorption number of at least 30 ml/100g which is measured according to ASTM D2414.

Furnace carbon blacks are preferred. This is a generally acknowledged term for the well-known carbon black type that is produced continuously in a furnace-type reactor. As examples of carbon blacks, the preparation process thereof and the reactors, reference can be made to i.a. EP-A-0629222 of Cabot, US 4,391,789, US 3,922,335 and US 3,401,020. As an example of commercial furnace carbon black grades described in ASTM D 1765-98b i.a. N351, N293 and N550, can be mentioned.

**Other components**

The composition may be crosslinked using peroxide or silane moisture curing systems. Crosslinking may also be effected using irradiation to avoid the need for a crosslinking agent.

Preferably, crosslinking is avoided and the resulting sheet is a more recyclable product. The semiconductive composition of the invention is preferably not crosslinked.

**Antioxidant**

The semiconductive composition may contain an antioxidant. As antioxidant, sterically hindered or semi-hindered phenols, aromatic amines, aliphatic sterically hindered amines, organic phosphates, thio compounds, polymerized 2,2,4-trimethyl-1,2-dihydroquinoline and mixtures thereof, can be mentioned.

More preferred, the antioxidant is selected from the group of 4,4'-bis(1,1'dimethylbenzyl)diphenylamine, para-oriented styrenated diphenylamines, 4,4'-thiobis (2-tert. butyl-5-methylphenol), polymerized 2,2,4-trimethyl-1,2-dihydroquinoline, 4-(1-methyl-1-phenylethyl)N-[4-(1-methyl-1-phenylethyl)phenyl] aniline or derivatives thereof.

More preferred, the antioxidant is selected from the group (but not limited to) of 4,4'- bis(1,1'dimethylbenzyl)diphenylamine, para-oriented styrenated diphenylamines, 4,4'-thiobis (2-tert. butyl-5-methylphenol), 2,2'-thiobis(6-t-butyl-4-methylphenol), distearylthiodipropionate, 2,2'-thio-diethyl-bis-(3-(3,5-di-tertbutyl-4-hydroxyphenyl)propionate, polymerized 2,2,4-trimethyl-1,2-dihydroquinoline, or derivatives thereof. Of course, not only one of the above-described antioxidants may be used but also any mixture thereof.

The amount of antioxidant, optionally a mixture of two or more antioxidants, can range from 0.005 to 2.5 wt-%, such as 0.01 to 2.5 wt-%, preferably 0.01 to 2.0 wt-%, more preferably 0.03 to 2.0 wt-%, especially 0.03 to 1.5 wt-%, more especially 0.05 to 1.5 wt%, or 0.1 to 1.5 wt% based on the weight of the semiconductive composition.

The semiconductive composition may comprise further additives. As possible additives stabilisers, processing aids, flame retardant additives, acid scavengers, inorganic fillers, voltage stabilizers, or mixtures thereof can be mentioned.

Preferably, the electrically semiconductive composition has a volume resistivity, measured at 90°C, of less than 500000 Ohm • cm, more preferably less than 100000 Ohm • cm, even more preferably less than 50000 Ohm • cm.

**Conductors**

The heater of the invention comprises a plurality of conductors. The term plurality is used herein to imply at least 2, such as at least 4 conductors. Ideally, the sheet of the invention comprises an even number of conductors. Ideally, in use, the conductors preferably have alternate polarity.

The elongate conductors can be made from any suitable conductive metal, typically copper or aluminium. The conductor may be in the form of a tape, foil or wire. Conductors may have a diameter or thickness of 0.05 to 2.0 mm. Conductors may have a width of 0.5 to 20 mm, such as 0.5 to 15 mm, 1.0 to 12 mm or 1.0 to 10 mm. The length of the elongate conductor is governed by the size of the flat sheet. The elongate conductor should pass through the majority, such as the whole, of the sheet. Each conductor may be provided with an electrode to allow the plurality of conductors to be inter connected and to allow the application of an external power source to create a circuit and hence heat. The conductors may be designed to be directly solderable for ease of installation.

The flat sheet heater may comprise a minimum of 4 separate conductors but it may contain many more conductors. The conductors are spaced apart from each and hence do not touch. Preferably, the conductors are substantially parallel to each other. Preferably, all conductors are evenly spaced from each other. By evenly spaced means that the distant between adjacent conductors is always substantially the same. The conductors are preferably linear and are preferably oriented in the machine direction relative to the semiconductive composition. In theory however the conductors might be curved (SS shaped for example) such that they remain equidistant from each other at all times. We regard this as being "parallel".

The elongate conductors are preferably spaced by an average distance of 20 to 2000 mm. In one embodiment, the average distance of between the conductors is 20 to 1000 mm, such as 20 to 600 mm or 25 to 250 mm, preferably 30 to 200 mm, more preferably 35 to 150 mm, even more preferably 40 to 100 mm, yet even more preferably 40 to 90 mm and most preferably 40 to 80 mm.

In one embodiment of the present invention, when the voltage is below 48 V, such as 12 V, the elongate conductors are preferably spaced by an average distance of 20 to 150 mm, such as 25 to 130 mm, preferably 30 to 120 mm, more preferably 35 to 110 mm, even more preferably 40 to 100 mm, yet even more preferably 40 to 90 mm and most preferably 40 to 80 mm.

In an alternative embodiment of the present invention, when the voltage is above 48 V, such as 220 or 230 V or 400 V, the elongate conductors are preferably spaced by an average distance of 20 to 1000 mm, such as 25 to 130 mm, preferably 30 to 120 mm, more preferably 35 to 110 mm, even more preferably 40 to 100 mm, yet even more preferably 40 to 90 mm and most preferably 40 to 80 mm.

These gaps between the conductors are important to ensure that heat is generated rapidly within the PTC material. If the conductors are too far apart then the PTC material takes a long time to warm up. Having the conductors closer together also allows the use of a lower voltage in the device. This is important as the heater can generate heat without the risk of an electric shock which makes them very suitable for use in close contact with humans or animals. Where higher voltages are used, such as where the heater is plugged into mains current, there is a larger risk of an electric shock. Where the gaps between conductors are reduced, sufficient heat can be generated from, for example, a battery. In one embodiment therefore the heater is supplied with direct current. This forms a further aspect of the invention. It is particularly preferred if the heater is supplied with direct current from a battery.

The conductors are in direct contact with the electrically semiconductive composition. There should not therefore be a layer separating the electrically semiconductive composition from the conductor. The conductors must also be at least partially embedded within the electrically semiconductive composition, i.e. they should not sit on top or underneath the electrically semiconductive composition but are at least partially encompassed by it. In a preferred embodiment of the present invention, the conductors are completely embedded within the electrically semiconductive composition, i.e. they are completely encompassed by it. This is achieved when the conductors are coextruded with the electrically semiconductive composition. It might also be achieved by sandwiching the conductors between two layers of electrically semiconductive composition.

When the conductors are embedded within the electrically semiconductive composition we avoid hot spots or localised overheating in the material.

The conductors preferably run parallel to the machine direction of the semiconductive composition.

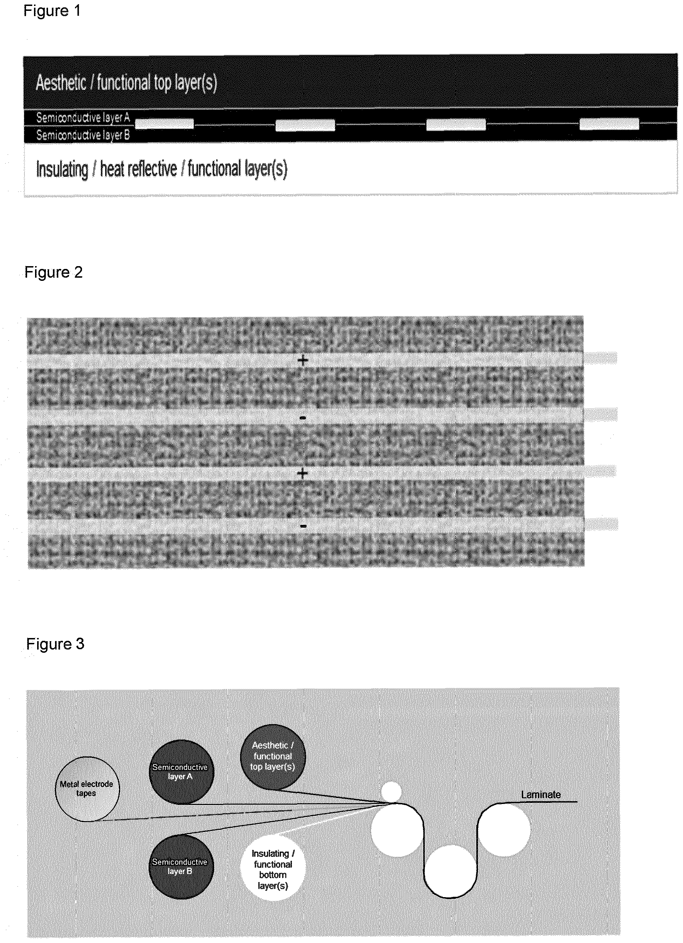

It will be appreciated that the conductor layer is not continuous and is formed from a plurality of discreet conductors which are preferably parallel and preferably evenly spaced. The gaps between these discreet conductors are filled by the electrically semiconductive composition, e.g. as shown in figure 1, during the colamination or coextrusion process.

**Production**

It is understood that the flat sheet self-regulating heaters according to the present invention can be produced with thickness, tailored conductor separation, and different filler levels to allow tailoring of the heat generated.

The temperature increase in the electrically semiconductive composition is governed mainly by the distance between the parallel conductors, the thickness of the electrically semiconductive composition, the amount of conductive filler present and the applied voltage. Closer conductors increase the temperature at which a steady elevated temperature plateau is reached. A thicker semiconductive composition in the flat sheet increases the temperature at which a steady elevated temperature plateau is reached.

Increases in conductive filler content increases the temperature at which a steady elevated temperature plateau is reached.

Increases in applied voltage increases the temperature at which a steady elevated temperature plateau is reached.

It is possible for the claimed flat sheet heater to be prepared by colamination. In such a process, two electrically semiconductive layers can be prepared, e.g. via extrusion. These may be allowed to cool before colamination occurs. The layers may be the same or different. Ideally they are the same. These layers are preferably the same thickness.

These layers can then be used to sandwich a layer of the conductors. One layer is therefore placed above and one layer placed below the conductors and the ensemble compressed together. The gaps between the conductors are therefore filled by the electrically semiconductive layers. It will be appreciated that the conductor layer is often very thin compared to the electrically semiconductive layers.

It is possible to heat one surface of one or both electrically semiconductive layers before colamination such that when colaminated together, the electrically semiconductive layers adhere to the conductors and adhere to the other electrically semiconductive layer without the use of a separate adhesive. In this way, the conductor layer becomes at least partially embedded within an electrically semiconductive composition.

In a particularly preferred embodiment, lamination between the layers only occurs close to the conductors. For example, a strip either side of each conductor may be melted to allow the two layers to adhere to each other. For example, a strip 5 mm either side of the location of the conductor in the flat sheet heater may be melted in one or both of the layers to allow the layers to be adhered. The width of the melted strip might be 5 to 20 mm either side of the location of the conductor, such as 10 to 20 mm. The width of the melted strip may be adjusted depending on the gap between the conductors.

The area of the sheet where the conductors will reside may also be melted to allow the conductors to stick to the flat sheet heater during the lamination process. The overall thickness of the strip to be melted may therefore take into account the diameter of the conductor itself. Thus, for a 2 mm diameter conductor with 5 mm either side of the conductor melted for lamination, the entire width of the strip melted is 12 mm.

Outside of these melted strips, the two layers are not laminated together so are able to move independently. This provides enhanced flexibility to the flat sheet heater which is important for applications such as heated clothing where the heater must be flexible. In this regard, one can imagine it is also beneficial when the semiconductive films as used in the heater according to the present invention are perforated in order to "breathe".

Figure 3 illustrates the proposed process in which the conductors are placed on one layer of the flat sheet heater and a strip either side of the conductors is melted to allow the second sheet to adhere to the first sheet. Conveniently, the conductor is adhered to the sheets during the lamination process so the area under the location of the conductors is also melted.

It will be appreciated that the melted strip could be on one layer or both layers of the laminate.

Viewed from another aspect the invention provides a process for the preparation of a multilayer flat sheet electrical heater comprising the steps of (a)

- providing and melt mixing in an extruder, a first electrically semiconductive composition comprising at least one polyolefin component such as polyethylene, polypropylene or a mixture thereof and a conductive filler and extruding said first electrically semiconductive composition to form a first layer,

- providing and melt mixing in an extruder, a second electrically semiconductive composition which comprises at least one polyolefin component such as polyethylene, polypropylene or a mixture thereof and a conductive filler and extruding said second electrically semiconductive composition to form a second layer,

    (b) colaminating said first and second layers with a plurality of evenly spaced apart elongate conductors wherein the average distance between elongate conductors is preferably between 20 to 150 mm to form a multilayer flat sheet heater having three layers, a core layer comprising a plurality of preferably evenly spaced apart elongate conductors sandwiched between and in contact with first and second electrically semiconductive composition layers;

    wherein the first and second layers are adhered only via a strip extending 50 to 200 cm either side of each conductor;

    wherein the semiconductive composition has an electrical conductivity $\sigma$ from 2 to 50 S/m, measured at 40°C in accordance with the "Conductivity method" as described under "Determination methods",

    wherein $20°C \leq T_{Eq} \leq 50\ °C$ and $T_{Eq}$ is defined as the temperature where d $\sigma$/dT is at its minimum.

As explained, the claimed flat sheet heater can be prepared using coextrusion or colamination. However, the heater of the invention is preferably not a typical laminate where the various layers are prepared separately and laminated together, using an adhesive. We do not require adhesive in our product to form the required heater.

The heater of the invention can therefore be prepared continuously.

Importantly, the semiconductive composition can be extruded onto the conductors and hence these are at least partially embedded within the semiconductive composition during the extrusion process rather than separately adhered to the semiconductive composition. The semiconductive composition that forms the layer above and below the plurality of conductors can therefore be extruded continuously onto those conductors.

The process described herein is therefore one that can be operated continuously maximising the value of the formed product. The heater of the invention is cheap. It is also thin and flexible.

It is preferred therefore if two semi-conductive layers are coextruded to encompass the central conductors, as shown in figure 3.

In the preferred embodiment of the invention the process comprises the steps of (a)

- providing and melt mixing in an extruder, a first electrically semiconductive composition comprising at least one polyolefin component such as polyethylene, polypropylene or a mixture thereof and a conductive filler,

- providing and melt mixing in an extruder, a second electrically semiconductive composition which comprises at least one polyolefin component such as polyethylene, polypropylene or a mixture thereof and a conductive filler,
    (b) applying on a plurality of preferably evenly spaced apart elongate conductors by coextrusion,

- a meltmix of the first electrically semiconductive composition obtained from step (a),

- a meltmix of the second electrically semiconductive composition obtained from step (a),

    to form a flat sheet heater having three layers, a core layer comprising a plurality of preferably parallel evenly spaced apart elongate conductors at least partially embedded within and in contact with said first and second electrically layers comprising said electrically semiconductive composition;

    wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity σ from 2 to 50 S/m, measured at 40°C in accordance with the "Conductivity method" as described under "Determination methods", wherein 20°C ≤ $T_{Eq}$ ≤ 50 °C and $T_{Eq}$ is defined as the temperature where d σ/dT is at its minimum.

This process can be readily adapted to include further layers above or below the semiconductive layers.

In one embodiment, crosslinking conditions can then be applied to cause a crosslinking reaction.

Melt mixing means mixing above the melting point of at least the major polymer component(s) of the mixture and is typically carried out in a temperature of at least 10-15°C above the melting or softening point of polymer component(s).

The term coextrusion means herein that two or more layers are extruded in the same extrusion step. The term coextrusion means that all or part of the layer(s) are formed simultaneously using one or more extrusion heads. For instance triple extrusion can be used for forming three layers.

The heater of the invention can therefore be seen as a multilayer flat sheet heater comprising, in this order, a first layer comprising an electrically semiconductive composition with a positive temperature coefficient comprising at least one polyolefin component such as polyethylene or polypropylene and a conductive filler;

a conductor layer comprising a plurality of spaced apart conductors;
a second layer comprising an electrically semiconductive composition with a positive temperature coefficient comprising at least one polyolefin component such as polyethylene, polypropylene or a mixture thereof and a conductive filler such that said conductor layer is at least partially embedded within and in contact with said first and second layers; wherein the semiconductive composition has an electrical conductivity σ from 2 to 50 S/m, measured at 40°C in accordance with the "Conductivity method" as described under "Determination methods", wherein 20°C ≤ $T_{Eq}$ ≤ 50 °C and $T_{Eq}$ is defined as the temperature where d σ/dT is at its minimum.

The electrodes are at least partially embedded within the semiconductive layers and preferably run parallel to the machine direction of the polymer layers. The two semiconductive compositions can be the same or different, preferably the same.

Once the coextrusion has been effected, the formed flat sheet can be crosslinked if required by subjecting the material to well-known crosslinking conditions.

**Flat sheet Heater**

The heater is in the form of a flat sheet which is sustainable, flexible, lightweight and cheap. The heater may be provided with one or more additional layers to protect the semiconductive composition from damage. For example, an aesthetic top layer can be textile fabric, non-woven or solid sheet (rubber, plastic, paper, wood, metal, etc.). The top layer may be extrudable, e.g. a polyolefin layer. In view of sustainability (recycling), it is preferred that no top layer(s) are used or the top layer(s) comprise the same material as the semiconductive composition.

In one embodiment the heater is provided with an insulation layer or heat reflective layer at the base of the heater. Such an insulation layer may be electrically insulating, thermally insulating or both. Such a layer increases the effectiveness of the heater. Such a layer may comprise a polyolefin such as a polyethylene, especially an LDPE, e.g. an LDPE homopolymer. Preferred insulation layers use LDPE as the only polymer component. Such a layer is preferably one that can be coextruded although lamination of this layer is also an option.

It is most preferred that any additional layers are also coextruded. In one embodiment, the heater comprises a five layer construction with conductors forming the central layer embedded within two electrically semiconductive layers which in turn are protected with further layers. This is an ABCDE type construction. The layers A/E and the layers B/D need not be the same.

It is preferred if the electrically semiconductive layers have substantially the same thickness.

Preferably, an insulating and/or heat reflective layer can be positioned underneath the semi-conductive composition(s). This layer can reduce heat losses. It may also provide mechanical protection of the semi-conductive layer(s) and strength to the flat sheet.

In a particular preferred embodiment, the use of an additional insulation layer is avoided. This makes the heater even cheaper. As the conductors are close together in the claimed invention and as that allows a reduction in the voltage required to power the heater, the use of an insulation layer is not required. Where higher voltages are used, the insulation layer serves to protection the PTC material and serves to protect a user from possible shock. In our device, depending on the application and the applied voltage, the use of such a layer is not required. The heater of the invention may therefore consist of the required conductor layer and semiconductive layers.

In use current is applied to the heater via the conductors to generate heat. Typically voltages are 10 to 70 v, such as 10 to 55 v, preferably 10 to 40 v, such as 12 to 30 v. The application of the power to the flat sheet heater leads to almost instant heat. There is no risk of electrocution as the voltage used does not need to be high which makes it very suitable for use in close contact with humans or animals. The heater could be powered via battery or direct from the mains with a suitable adapter.

The heater itself may reach its self-regulating in less than 300 seconds from the application of power. Preferably, the heater will reach its self-regulating temperature between 50 and 250 seconds after power is applied. The heater therefore reaches its self-regulating incredibly rapidly.

The heater itself is preferably up to 20 mm in thickness, preferably up to 10 mm, such as 0.25 to 5 mm. The key semiconductive composition layers may be 100 to 900 $\mu$m in thickness, such as 125 to 800 $\mu$m.

The width of the heater can be adjusted readily to any possible use. The width may be a function of the coextrusion or colamination apparatus and sheets from 3 cm to 5 metres can be produced readily.

As previously discussed, the heating power of the flat sheet heater can be controlled through the thickness of the sheet, separation of the conductors, conductive filler content and applied voltage. Moving the conductors closer together increases the wattage and hence the heat generated. The relationship can be expressed as power = [voltage] $^2$/resistance.

As the semiconductive composition layers are thin, the flat sheet heater of the invention is very flexible making it ideal for use in environments where flexibility is essential. Such environments include heated clothing or heated car seats where the flat sheet heater needs to flex to operate efficiently.

Thicker flat sheets tend to increase the power output.

The simplicity of the claimed flat sheet heater is also important as that makes it very cheap to manufacture. The entire device can be manufactured using coextrusion or colamination. no adhesive etc is required.

**Applications**

The flat sheet heater of the invention can be utilised in many fields but is particularly suitable for use in close contact with humans or animals. Applications of the technology described herein are therefore widespread.

We often provide thermal comfort in winter by heating the entire volume of air in a room or building. In earlier times, our ancestor's concept of heating was more localized: heating people, not places. They used radiant heat sources that warmed only certain parts of a room, creating micro-climates of comfort. These people countered the large temperature differences with insulating furniture, such as hooded chairs and folding screens, and they made use of additional, personal heating sources that warmed specific body parts. In view of sustainable living, it would make a lot of sense to restore this old way of warming, especially since modern technology has made it so much more practical, safe and efficient.

The heater of the invention may therefore be employed within an item of furniture such as a screen, chair or sofa.

In one embodiment the heater of the invention might be used in a heated garment. Heated garments available today have small wires (often made of brittle carbon fibres) built into them. They heat up when a low voltage electric current is passed through. There are two main types of heated clothing, battery powered or powered by a vehicle (e.g. heated gloves on a motorcycle). The heaters of the invention are ideally suited for use in both these applications.

The heater may also be used in a blanket. A major concern with electric heating blankets on the market today is fire risk. These blankets tend to overheat. Using the heater of the present invention that risk is eliminated.

Radiators are large, immobile and often unattractive. In many parts of the world, radiators are hidden behind more aesthetically pleasing covers of various designs. These covers may also reduce noise or protect against the touching of radiators that get excessively hot. But hiding the radiator is not efficient because adding a radiator cover slows the movement of heat out of the radiator and into the room. The rate of heat loss out through the building's exterior wall is likely to be increased.

The sheets of the invention can replace radiators or be used in walls, under floors, in ceilings as heaters. The heater could even be included within a carpet or rug or other floor covering

Electric cars generate next to no heat as opposed to conventional passenger vehicles, which produce more than enough engine heat to heat the interior. An additional electric heater is therefore required in an electric vehicle to heat the interior.

This heater is supplied with power by the same battery that provides the engine with energy. This can reduce the maximum possible drive distance by a considerable amount.

Thus, there is a need for heating e-vehicles as efficiently as possible. The present invention might be used to heat inner contact surfaces such as steering wheel, armrest, door panels, seats within the vehicle. More efficient heating can be envisaged compared to heating the entire inner volume of the car, especially for short journeys.

The heater of the invention could be used to prevent ice or snow build up on a critical surface such as a solar panel. Heaters might therefore have utility in deicing operations. Other surfaces might be wing mirrors.

The heaters are also flexible and might be wrapped around pipes to prevent liquid freezing therein. Heaters can furthermore be used to keep fluids heated e.g. in swimming pools or liquid containers.

**Brief Description of the Figures**

Figure 1 is a theoretical image of a flat sheet heater of the invention. Semiconductor layers A and B sandwich conductors that are evenly distributed in the sheet. Top and bottom layers sandwich the semiconductive layer. The top layer is aesthetic and bottom layer acts as an insulation or heat reflective layer. In some embodiments, the top and/or bottom layers can be removed. A particularly preferred structure is therefore simply the semiconductive layers A and B with the conductor layer. It is further preferred if the semiconductive layer material is the same in both layers A and B and that the thickness of layers A and B is the same.

In Figure 2 is a cross section of a flat sheet heater of the invention of figure 1 seen from above. A plurality of conductors are embedded within the electrical semiconductive layers. These layers are formed via colamination or coextrusion of the semiconductive composition and the conductor. They have alternate polarity.

Figure 3 is a schematic illustration of the manufacturing process. The set up in figure 3 leads to a 5 layer type construction with aesthetic top layer, 1st semicon layer, conductor layer, 2nd semicon layer and insulation layer. The conductors are dispensed as metal electrode tapes to form the central layer in the coextruded or colaminated sheet. Semiconductor compositions are coextruded or colaminated to form layers on either side of the conductors with top and bottom layers being coextruded or colaminated on the upper and lower surfaces of the semiconductive layers. In case of coextrusion, the relevant polymers are melted and coextruded through a die to nip rollers before passing over further rollers to form the multilayer flat sheet. The nip rollers can be heated and/or coated to prevent adhesion of the polymer melt to the roller.

The lowest layer typically meets the heated roll for a quarter of a turn with the other layers in direct contact with the layer below. Most heat hits the lower layer. At the start of the turn, both rolls are separated by, for example a distance of 0.3 mm. The three layers then align to the second roll for a half turn before passing over a third roll for a quarter turn.

Current can then be applied by connecting the conductors to a power supply.

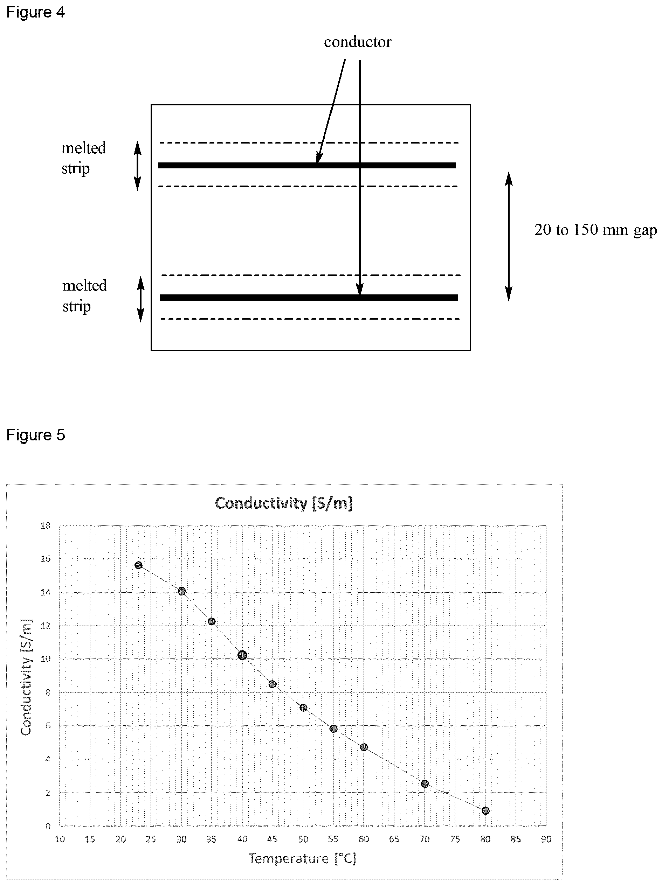

Figure 4 shows a cross section of one layer of a flat sheet heater in which a strip either side of the conductor is melted to allow colamination to a second sheet.

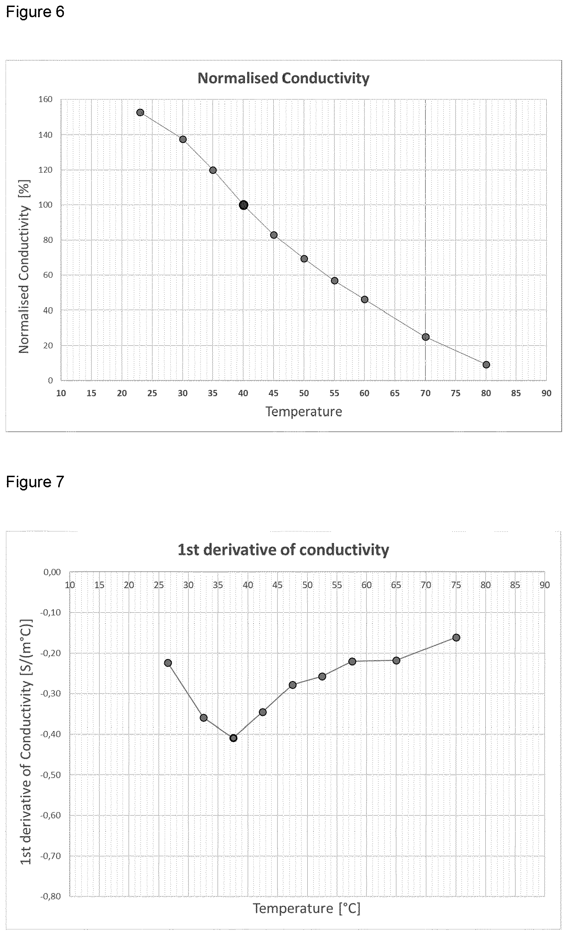

Figures 5 to 7show the electrical conductivity σ and normalised conductivity vs. temperature T and the first derivative of conductivity dσ/dT. Table 1 and 2 summarises the data.

**Examples**

Manufacturing processes

Self-regulating heating laminates have been made using continuous processes.

A semiconductive composition was prepared containing about 61.2wt% of a copolymer of ethylene and vinyl acetate (MFR2 at 190 °C ~ 7.0 g/10min.), 0.4 wt% of an antioxidant, 0.4 wt% of an acid scavenger and about 38 wt% of carbon. This is used in the examples which follow.

**Determination methods**

Conductivity method

From an extruded film, a specimen was punched out having a 25 mm width (w) and a 160 mm length. The specimen was oven dried for ~5h at 60°C and subsequently kept in a desiccator for a minimum of 16h. For the actual volume resistivity (VR) measurement, electrodes were attached to the sample with a 130 mm gap. In order to compensate for so called contact resistance, two more electrodes were attached 10 mm further out from the measurement electrodes. The electrodes were connected to an apparatus that can provide the resistance (R) between the electrodes (e.g. multimeter or VOM-device). The resistance R was measured in ohms. The volume resistivity (VR) was then calculated by multiplying the resistance (R) with the cross-sectional area (A) wherein A = h*w (3*25 mm) of the specimen, divided by the length (L) between the electrodes (130 mm) or VR=R *A/L/ The electrical conductivity σ is then calculated as σ = 1/VR.

**Example 1- Conductivity of semiconductive composition**

In Table 1 below, the electrical conductivity σ vs. temperature T is presented. In addition, the first derivative of conductivity is calculated in Table 2, revealing the equilibrium temperature $T_{Eq}$ at which conductivity vs. temperature has the steepest negative slope, i.e. where $d\sigma/dT$ is at its minimum. As mentioned, this can be seen as the material's most optimal or equilibrium self-regulating temperature. When $T_{Eq}$ is between 20 and 50°C, such as 37.5°C as indicated in Table 2, the material is ideal for use in applications in close contact with humans and/or animals.

**Table 1 - Measured Volume resistivity, Conductivity and Normalised conductivity**

| Temperature, T [°C] | Volume resistivity, VR [Ohm·cm] | Conductivity, $\sigma$ = 1/VR [S/m] | Normalised conductivity [%] |
|---|---|---|---|
| 23 | 6,4 | 15,625 | 153 |
| 30 | 7,11 | 14,064 | 138 |
| 35 | 8,15 | 12,269 | 120 |
| 40 | 9,78 | 10,225 | 100 |
| 45 | 11,77 | 8,4962 | 83,1 |
| 50 | 14,07 | 7,1073 | 69,5 |
| 55 | 17,17 | 5,8241 | 56,9 |
| 60 | 21,16 | 4,7259 | 46,2 |
| 70 | 39,22 | 2,5497 | 24,9 |
| 80 | 106,44 | 0,9395 | 9,18 |

**Table 2 - Slope of conductivity vs. Temperature i.e. calculated 1st derivative of conductivity**

| Mean temperature[1] between measurement points [°C] | 1st derivative of conductivity[2] [S/(m·°C)] |
|---|---|
| 26,5 | -0,2229 |
| 32,5 | -0,3589 |
| 37,5 | -0,4090 |
| 42,5 | -0,3457 |
| 47,5 | -0,2777 |
| 52,5 | -0,2566 |
| 57,5 | -0,2196 |
| 65 | -0,2176 |
| 75 | -0,1610 |

[1] $(T_2 + T_1)/2$
[2] $d\sigma/dT$ calculated from $(\sigma_2 - \sigma_1) / (T_2 - T_1)$

**Claims**

1. A flat sheet electrical heater, preferably obtainable by coextrusion or colamination, comprising:

   a plurality of elongate conductors, preferably evenly spaced apart from and preferably substantially parallel to each other,
   said conductors being at least partially embedded within and in contact with an electrically semiconductive composition with a positive temperature coefficient (PTC) comprising at least one polyolefin component such as a polyethylene, polypropylene or a mixture thereof and a conductive filler,
   wherein said electrically semiconductive composition preferably is comprised in an extruded film having a machine direction and said conductors are preferably parallel with the machine direction of the extruded film comprising the semiconductive composition;
   wherein the semiconductive composition has an electrical conductivity $\sigma$ from 2 to 50 S/m, measured at 40°C in accordance with the "Conductivity method" as described under "Determination methods" and
wherein 20°C ≤ $T_{Eq}$ ≤ 50 °C and $T_{Eq}$ is defined as the temperature where $d\sigma/dT$ is at its minimum.

2. A multilayer flat sheet electrical heater, preferably obtainable by coextrusion or colamination, more preferably by colamination, comprising in this order,

a first layer comprising an electrically semiconductive composition with a positive temperature coefficient comprising at least one polyolefin component such as a polyethylene, polypropylene or a mixture thereof and a conductive filler;
a conductor layer comprising a plurality of elongate conductors evenly spaced apart from and substantially parallel to each other wherein the distance between elongate conductors is 20 to 2000 mm;
a second layer comprising an electrically semiconductive composition with a positive temperature coefficient comprising a polyethylene, polypropylene or a mixture thereof and a conductive filler such that said conductor layer is sandwiched between and in contact with said first and second layers;
wherein said electrically semiconductive composition layers are preferably comprised in an extruded film having a machine direction and said conductors are preferably parallel with the machine direction of the extruded film comprising the semiconductive composition layers;
wherein the semiconductive composition has an electrical conductivity $\sigma$ from 2 to 50 S/m, measured at 40°C in accordance with the "Conductivity method" as described under "Determination methods",
wherein 20°C ≤ $T_{Eq}$ ≤ 50 °C and $T_{Eq}$ is defined as the temperature where $d\sigma/dT$ is at its minimum.

3. A multilayer flat sheet electrical heater as claimed in claim 2 wherein the flat sheet electrical heater is provided with at least one further layer above said first layer and/or at least one further layer below said second layer, preferably an insulation layer, e.g. a thermal insulation layer.

4. A flat sheet electrical heater as claimed in any preceding claim wherein the electrically semi-conductive composition comprises a LDPE homopolymer or LDPE copolymer.

5. A flat sheet electrical heater as claimed in any preceding claim wherein the electrically semiconductive composition comprises an ethylene alkyl acrylate or ethylene vinyl acetate polymer.

6. A flat sheet electrical heater as claimed in any preceding claim wherein the conductive filler comprises carbon black.

7. A flat sheet electrical heater as claimed in any preceding claim wherein the semiconductive composition has a conductivity $\sigma$ measured at 40°C in accordance with the "Conductivity method" as described under "Determination methods" from 4 S/m to 40 S/m, preferably from 5 S/m to 30 S/m, more preferably from 6 S/m to 25 S/m, even more preferably from 6 S/m to 10 S/m and/or a first derivative or $d\sigma/dT$ between 23°C and 40°C, equal to or higher than -0.7 S/(m-°C), preferably equal to or higher than -0.6 S/(m·°C) or equal to or higher than -0.5 S/(m·°C), and preferably, equal to or lower than -0.05 S/(m·°C), more preferably equal to or lower than -0.10 S/(m·°C), even more preferably equal to or lower than -0.15 S/(m·°C)".

8. A flat sheet electrical heater as claimed in any preceding claim wherein the semiconductive composition has a conductivity $\sigma$ measured at 40°C in accordance with the "Conductivity method" as described under "Determination methods" and the minimum value of the first derivative $d\sigma/dT$, further on referred to as min. $d\sigma/dT$ is equal to or higher than -0.7 S/(m·°C), preferably equal to or higher than -0.6 S/(m·°C) or equal to or higher than -0.5 S/(m·°C), and preferably, equal to or lower than -0.1 S/(m·°C), more preferably equal to or lower than -0.2 S/(m·°C), even more preferably equal to or lower than -0.3 S/(m·°C).

9. A flat sheet electrical heater as claimed in any preceding claim wherein $T_{Eq}$ is equal to or higher than 25°C, more preferably equal to or higher than 28°C, even more preferably equal to or higher than 30°C, yet even more preferably equal to or higher than 32°C, yet even more preferably equal to or higher than 34°C, most preferably equal to or higher than 35°C and preferably, the $T_{Eq}$ is equal to or lower than 48°C, more preferably equal to or lower than 46°C, even more preferably equal to or lower than 44°C, yet even more preferably equal to or lower than 42°C and most preferably equal to or lower than 40°C.

10. A flat sheet electrical heater as claimed in any preceding claim comprising more than 6 conductors.

11. A flat sheet electrical heater as claimed in any preceding claim wherein the semiconductive composition layers may be 100 to 900 μm in thickness, such as 125 to 800 μm and/or wherein the heater has a thickness of 0.25 to 20 mm.

12. A flat sheet heater as claimed in any preceding claim which is free of an adhesive.

13. A process for the preparation of a multilayer flat sheet electrical heater comprising the steps of (a)

- providing and melt mixing in an extruder, a first electrically semiconductive composition comprising a polyethylene, polypropylene or a mixture thereof and a conductive filler,
- providing and melt mixing in an extruder, a second electrically semiconductive composition which comprises apolyethylene, polypropylene or a mixture thereof and a conductive filler,
(b) applying on a plurality of evenly spaced apart elongate conductors by coextrusion,
- a meltmix of the first electrically semiconductive composition obtained from step (a),
- a meltmix of the second electrically semiconductive composition obtained from step (a),

to form a multilayer flat sheet heater having three layers, a core layer comprising a plurality of parallel evenly spaced apart elongate conductors at least partially embedded within and in contact with said first and second electrically semiconductive composition layers;
wherein said electrically semiconductive composition layers are preferably comprised in an extruded film having a machine direction and said conductors are preferably parallel with the machine direction of the extruded film comprising the semiconductive composition layers.

14. A process for the preparation of a multilayer flat sheet electrical heater comprising the steps of (a)

- providing and melt mixing in an extruder, a first electrically semiconductive composition comprising a polyethylene, polypropylene or a mixture thereof and a conductive filler and extruding said first electrically semiconductive composition to form a first layer,
- providing and melt mixing in an extruder, a second electrically semiconductive composition which comprises a polyethylene, polypropylene or a mixture thereof and a conductive filler and extruding said second electrically semiconductive composition to form a second layer,

(b) colaminating said first and second layers with a plurality of evenly spaced apart elongate conductors wherein the distance between elongate conductors is 20 to 1000 mm to form a multilayer flat sheet heater having three layers, a core layer comprising a plurality of evenly spaced apart elongate conductors sandwiched between and in contact with first and second electrically semiconductive composition layers;
wherein the first and second layers are adhered only via a strip extending 50 to 200 cm either side of each conductor.

15. An article comprising a flat sheet electrical heater as claimed in claim 1 to 12, e.g. heated clothing or a car seat.

16. A process for heating an article comprising applying a current to an article comprising a flat sheet electrical heater as claimed in claim 1 to 12 wherein said conductors have alternate polarity.

17. Use of a flat sheet electrical heater as claimed in claim 1 to 12 to heat an object (e.g. in heated clothing or heated car seats) or to heat an environment (e.g. a room) where the applied voltage to said flat sheet electrical heater is 10 to 70 v, such as 12 to 40 v and/or wherein the heater is supplied with direct current.

Figure 1

Aesthetic / functional top layer(s)

Semiconductive layer A

Semiconductive layer B

Insulating / heat reflective / functional layer(s)

Figure 2

Figure 3

Metal electrode tapes

Semiconductive layer A

Aesthetic / functional top layer(s)

Laminate

Semiconductive layer B

Insulating / functional bottom layer(s)

Figure 4

conductor

melted
strip

20 to 150 mm gap

melted
strip

Figure 5

Figure 6

**Normalised Conductivity**

Figure 7

**1st derivative of conductivity**

Europäisches
Patentamt

European
Patent Office

Office européen
des brevets

# EUROPEAN SEARCH REPORT

Application Number

EP 22 17 9004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/038357 A1 (FUKUDA HIROSI [JP] ET AL) 18 February 2010 (2010-02-18) * paragraph [0001] * * paragraph [0042] * * paragraph [0080] – paragraph [0081]; figures 6A-6B * * paragraph [0095]; figures 6A,6B * * paragraph [0141]; figures 10A-10B * * paragraph [0143]; figures 11A-11B * ----- | 1,4-12, 15-17 | INV. H05B3/34 H05B3/14 |
| X | EP 3 015 360 A1 (AIRBUS OPERATIONS GMBH [DE]) 4 May 2016 (2016-05-04) * paragraph [0001] * * paragraph [0006] * * paragraph [0023] – paragraph [0025]; figure 1 * * paragraph [0026]; figure 2 * ----- | 1,4-10, 12,15,16 | |
| X | US 2014/166638 A1 (IRGENS O STEPHAN [US] ET AL) 19 June 2014 (2014-06-19) * paragraph [0002] – paragraph [0003] * * paragraph [0020] – paragraph [0021]; figure 1 * * paragraph [0027] * * paragraph [0028]; figures 4-5 * ----- | 1-9, 12-17 | TECHNICAL FIELDS SEARCHED (IPC) H05B |
| A | EP 3 726 926 A1 (ATT ADVANCED THERMAL TECH GMBH [AT]) 21 October 2020 (2020-10-21) * paragraph [0001] – paragraph [0002] * * paragraph [0016]; figure 4 * * paragraph [0017]; figure 5 * ----- | 1-17 | |

The present search report has been drawn up for all claims

| Place of search | Date of completion of the search | Examiner |
|---|---|---|
| Munich | 28 November 2022 | Barzic, Florent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 9004

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2022

| Patent document cited in search report | | Publication date | Patent family member(s) | | Publication date |
|---|---|---|---|---|---|
| US 2010038357 | A1 | 18-02-2010 | CA | 2675484 A1 | 31-07-2008 |
| | | | CA | 2675533 A1 | 31-07-2008 |
| | | | EP | 2123120 A2 | 25-11-2009 |
| | | | EP | 2127473 A2 | 02-12-2009 |
| | | | JP | 5201137 B2 | 05-06-2013 |
| | | | JP | 5278316 B2 | 04-09-2013 |
| | | | JP | 2010517205 A | 20-05-2010 |
| | | | JP | 2010517206 A | 20-05-2010 |
| | | | US | 2010038356 A1 | 18-02-2010 |
| | | | US | 2010038357 A1 | 18-02-2010 |
| | | | US | 2013277359 A1 | 24-10-2013 |
| | | | WO | 2008091001 A2 | 31-07-2008 |
| | | | WO | 2008091003 A2 | 31-07-2008 |
| EP 3015360 | A1 | 04-05-2016 | CN | 105564630 A | 11-05-2016 |
| | | | EP | 3015360 A1 | 04-05-2016 |
| | | | US | 2016121993 A1 | 05-05-2016 |
| US 2014166638 | A1 | 19-06-2014 | EP | 2931515 A1 | 21-10-2015 |
| | | | US | 2014166638 A1 | 19-06-2014 |
| | | | WO | 2014093787 A1 | 19-06-2014 |
| EP 3726926 | A1 | 21-10-2020 | AT | 522472 A1 | 15-11-2020 |
| | | | EP | 3726926 A1 | 21-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014188190 A
- US 6512203 B
- US 7250586 B
- US 4247756 A
- US 7053344 B
- EP 0731623 A
- US 5451747 A
- WO 2008133562 A
- WO 9308222 A
- EP 0629222 A
- US 4391789 A
- US 3922335 A
- US 3401020 A